# EUROPÄISCHE PATENTANMELDUNG

(11) **EP 2 567 860 A1**
(43) Veröffentlichungstag der Anmeldung: **13.03.2013**
(21) Anmeldenummer: 12006038.9
(22) Anmeldetag: 24.08.2012
(51) Int. Cl.: B60N 2/14, B60N 2/24, B60N 2/06, B60N 2/04

(54) **Montagevorrichtung für einen Fahrzeugsitz sowie Fahrzeugsitz**

(30) Priorität: 08.09.2011 DE 102011112428
(71) Anmelder: AGUTI PRODUKTENTWICKLUNG & DESIGN GMBH, 88085 Langenargen (DE)
(72) Erfinder: Grieger, Andreas, 88079 Kressbronn (DE); Grieger, Michael, 88079 Kressbronn (DE)
(74) Vertreter: Dobler, Markus

(57) **Zusammenfassung**

Es wird eine Montagevorrichtung für einen Fahrzeugsitz, welche eine Montageeinheit für ein Sitzelemt des Fahrzeugsitzes zur Anordnung in einem Fahrzeug umfasst, vorgeschlagen, wobei eine Verlagerungseinrichtung vorgesehen ist, die auf einer Dreheinheit der Montagevorrichtung sitzt und mit welcher die Montageeinheit in Bezug zur Dreheinheit seitlich bezogen auf eine Dreheinheitvorderseite verlagerbar ist, die in einem unverdrehten und in einem im Fahrzeug montierten Zustand in Fahrtrichtung zeigt.

Des Weiteren wird eine Schwenkeinheit vorgeschlagen, mit welcher die Montageeinheit in einem bestimmungsgemäß montierten Zustand in Bezug auf einen Unterbau quer zur Fahrtrichtung verschwenkbar ist.

## Beschreibung

Die Erfindung betrifft eine Montagevorrichtung für einen Fahrzeugsitz nach dem Oberbegriff des Anspruchs 1 sowie einen Fahrzeugsitz.

Stand der Technik:

Sitzeinheiten der einleitend bezeichneten Art sind in vielfältigen Ausführungsformen bereits bekannt.

In Reisemobilen werden zum Beispiel Fahrzeugsitze eingesetzt, die sich drehen lassen, um den Fahrzeugsitz bei Stillstand des Fahrzeugs in einer anderen Position nutzen zu können. Zur Vermeidung einer Kollision mit Einbauten im Fahrzeug, ist es gegebenenfalls erforderlich den Drehpunkt einer Dreheinheit asymmetrisch vorzusehen. Bei asymmetrischen Drehpunkten ergibt sich bei gedrehtem Sitz ein Versatz des Sitzes beispielsweise zur Fahrzeugmitte hin. Durch Symmetrie-Verlagerung der Dreheinheit lässt sich der Sitz insbesondere an Begrenzungen der Fahrzeugaußenseite leicht vorbeidrehen, was ohne asymmetrische Drehanordnung nicht möglich wäre. Des Weiteren lassen sich Fahrzeugsitze standardmäßig nach vorne und hinten verschieben.

Aufgabe und Vorteile der Erfindung:

Der Erfindung liegt die Aufgabe zu Grunde, eine verbesserte Nutzung eines verlagerbaren Fahrzeugsitzes zu realisieren.

Diese Aufgabe wird durch die Merkmale des Anspruchs 1 bzw. 13 gelöst.

In den abhängigen Ansprüchen sind vorteilhafte und zweckmäßige Weiterbildungen der Erfindung angegeben.

Die Erfindung geht von einer Montagevorrichtung für einen Fahrzeugsitz aus, welche eine Montageeinheit für ein Sitzelement des Fahrzeugsitzes zur Anwendung in einem Fahrzeug umfasst.

Der Kern der Erfindung liegt darin, dass eine Verlagerungseinheit vorgesehen ist, die auf einer Dreheinheit der Montagevorrichtung sitzt und mit welcher die Montageeinheit in Bezug zur Dreheinheit seitlich bezogen auf eine Dreheinheitvorderseite verlagerbar ist, die in einem unverdrehten und in einem im Fahrzeug montierten Zustand in Fahrtrichtung zeigt.

Durch diese Maßnahme wird es möglich, insbesondere bei einer asymmetrischen Dreheinheit nach der Drehung einen Sitz, der sich durch die Drehung von zum Beispiel 90° zur Fahrzeugmitte verlagert hat, zurückzubewegen, um im mittleren Bereich des Fahrzeuges gewünschte Bewegungsfreiheit zurückzuerhalten.

Des Weiteren kann z. B. bei einer symmetrischen Dreheinheit vor oder nach der Verdrehung der Sitz seitlich in eine gewünschte Position verschoben werden, um Behinderungen durch Einbauten im Fahrzeug bei einer Drehung auszuschließen bzw. um auf ein gewünschtes Platzbedürfnis zu reagieren.

In einer überdies bevorzugten Ausgestaltung der Erfindung umfasst die Verlagerungseinrichtung eine Gleiteinheit, mit welcher die Montageeinheit in Bezug zur Dreheinheit seitlich bezogen auf eine Dreheinheitvorderseite, die in einem unverdrehten und in einem im Fahrzeug montierten Zustand in Fahrtrichtung zeigt, verschiebbar ist. Die Gleiteinheit ist zum Beispiel zwischen der Montageeinheit und der Dreheinheit angeordnet.

Mit einer solchen Gleiteinheit lässt sich vergleichsweise einfach eine Verlagerung um zum Beispiel 90° zur Fahrtrichtung mit einer um 90° zur Fahrtrichtung versetzten Gleitschiene realisieren. Auf diese Weise lässt sich zum Beispiel ein Sitz vor oder nach dem Drehen des Sitzes seitlich in Fahrtrichtung links oder rechts verlagern.

Bei einer weiteren wesentlichen Ausgestaltung der Erfindung umfasst die Montagevorrichtung eine Schwenkeinheit, mit welcher die Montageeinheit in Bezug auf einen Unterbau in einem bestimmungsgemäß montierten Zustand quer zur Fahrtrichtung verschwenkbar ist. Durch eine Schwenkeinheit bietet sich im Vergleich zu einer Gleiteinheit eine noch größere Freiheit für die Positionierung eines Sitzes in Bezug zu einem Unterbau. Gegebenenfalls lassen sich beliebig viele Schwenkstellungen der Montageeinheit in Bezug zu einem Unterbau realisieren, womit eine große Freiheit für die Positionierung eines Sitzes besteht. Die Schwenkeinheit kann zusätzlich zu oder anstelle einer Gleiteinheit der zuvor beschriebenen Ausführungsform eingesetzt werden.

In Abgrenzung zu einer Dreheinheit kann eine Schwenkbewegung der Schwenkeinheit nicht durch lediglich ein einziges Drehzentrum beschrieben werden, wie es bei einer symmetrischen oder asymmetrischen Dreheinheit der Fall ist. Auch lässt sich die schwenkbewegung nicht nur durch eine lineare Bewegung beschreiben. Es ist eine Kombination aus linearer Bewegung und Drehbewegung. Außerdem findet durch die Schwenkeinheit immer eine Versetzung aller Punkte des verschwenkten Elements zu einem Unterbau statt.

Im weiteren ist es besonders bevorzugt, wenn die Schwenkeinheit wenigstens zwei Schwenkhebel aufweist, die zwischen einem Unterbau und einer Montageeinheit derartig gelenkig anordnungbar sind, dass sich die Schwenkhebel für einen Schwenkvorgang gemeinsam verschwenken lassen und dabei die Montageeinheit seitlich in Bezug zu einer Fahrtrichtung verlagern.

Dabei sind vorzugsweise die wenigstens zwei Schwenkhebel so angeordnet, dass bei einem Schwenkvorgang sich die Schwenkhebel in der Art eines Parallelogramms bewegen. Zum Beispiel zeigen die Schwenkhebel von einem Unterbau aus betrachtet im montierten Zustand entgegen der Fahrtrichtung eines Fahrzeugs nach hinten. Wird nunmehr eine Schwenkbewegung eingeleitet, findet eine Verlagerung der Montageeinheit und eines gegebenenfalls darauf montierten Sitzes bezogen auf eine Fahrtrichtung entweder nach links oder rechts seitlich vorne statt. Zeigen hingegen die Schwenkhebel von einem Unterbau aus betrachtet in einem Ausgangszustand, zum Beispiel einem arretierten Zustand, in einer Fahrposition nach vorne und wird nunmehr eine seitliche Verlagerung eingeleitet, bewegt sich die Montageeinheit jeweils entweder links oder rechts seitlich nach hinten. Bei einer 90° Verdrehung des Schwenkhebels zum Unterbau ist eine maximal seitliche Auslenkung erreicht.

Vorzugsweise werden vier Schwenkhebel in jedem Eckbereich eines Unterbaus angesetzt, wodurch sich eine besonders einfache und robuste Realisierung einer Verlagerungseinrichtung ergibt. Die Schwenkhebel sind vorzugsweise alle gleich lang, und bewegen sich gleichgerichtet in der Art eines Parallelogramms.

Je nach Anwendungsfall sind verschiedene Schwenkzustände denkbar. Vorzugsweise lassen sich die Schwenkhebel zumindest 90°, 180°, 270° oder gar 360° verschwenken. Denkbar ist, dass eine Montageeinheit sich mit den Schwenkhebeln bei einer vollen 360° Verdrehmöglichkeit der Schwenkhebel in alle Richtungen verlagern lässt.

Vorzugsweise weisen die Schwenkhebel Anschlagmittel auf, die eine Schwenkbewegung nur in einem vorgesehenen Schwenkbereich erlauben.

In einer weiteren besonders bevorzugten Ausgestaltung der Erfindung ist zumindest eine Verlagerungsstellung der Montageeinheit in Bezug auf einen Unterbau arretierbar. Vorzugsweise sind eine Vielzahl von Schwenkstellungen bzw. Verschiebestellungen arretierbar.

Insbesondere ein Ausgangszustand sollte arretierbar ausgeführt sein.

Im Weiteren ist es vorteilhaft, wenn eine Gleiteinheit vorgesehen ist, mit welcher die Montageeinheit in und entgegen der Fahrtrichtung verschiebbar ist, bezogen auf einen unverlagerten nicht verdrehten Zustand der Montageeinheit. Hierdurch ist gewährleistet, dass ein Sitz wie gewohnt in Fahrtrichtung nach vorne und nach hinten für die Anpassung an eine gewünschte Sitzstellung einstellbar ist.

Im Weiteren ist es bevorzugt, wenn die Montageeinheit eine Dreheinheit umfasst. Dadurch ist es möglich, mit der Verlagerungseinrichtung die komplette Dreheinheit mitzuverlagern, das heißt mit zu verschieben und/oder auszuschwenken.

In diesem Zusammenhang bedeutet dann Verlagerung der Dreheinheit nicht eine Verdrehung der Dreheinheit in sich, sondern eine Positionsänderung der kompletten Dreheinheit in Bezug auf einen Unterbau unabhängig davon, welche Drehstellung die Dreheinheit dann gegebenenfalls zusätzlich einnimmt.

Damit kann für eine Drehung des Sitzes zunächst eine Verlagerung der Dreheinheit über die Verlagerungseinrichtung vorgenommen werden, zum Beispiel in eine seitliche Richtung link oder rechts zum Fahrzeugsitz, um anschließend eine gewünschte Drehung des Fahrzeugsitzes vorzunehmen. Durch die Verlagerungseinrichtung ist der Fahrzeugsitz vorzugsweise so positioniert, dass eine Kollision mit begrenzenden Elementen im Fahrzeug durch die Verlagerung bei der Drehung nicht mehr stattfindet. Darauf hin kann erneut eine Verlagerung des Fahrzeugsitzes erfolgen, um zum Beispiel einen gewünschten Platzbedarf, gegebenenfalls im Gangbereich eines Fahrzeugs nach einer Verdrehung wieder zurückzuerhalten.

Die Beschreibung der Ausführungsbeispiele:

Mehrere Ausführungsbeispiele der Erfindung sind in den Figuren dargestellt und werden nachfolgend unter Angabe weiterer Vorteile und Einzelheiten näher erläutert. Es zeigen:
- Figur 1a bis 1h: in einer schematischen dreidimensionalen Ansicht ein Fahrzeugsitz mit Verschiebemitteln und einer Dreheinheit in verschiedenen Verschiebe- und Drehstellungen und
- Figur 2a bis 2f: einen weiteren Fahrzeugsitz mit einer Dreheinheit und einer Schwenkeinheit in entsprechender schematischer räumlicher Ansicht wie die Ausführungsform nach den Figuren 1a bis h. In verschiedenen Schwenk- und Drehstellungen.

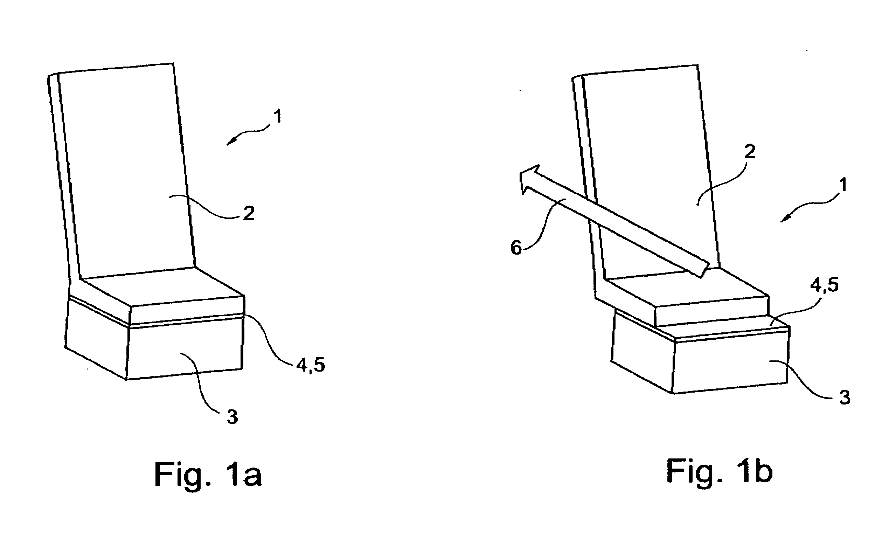

In den Figuren 1a bis 1h ist ein Fahrzeugsitz 1 abgebildet, der ein Sitzelement 2, einen Unterbau 3, eine Dreheinheit 4, auf welcher eine Verschiebeeinheit 5 angeordnet ist.

In Figur 1a ist eine Ausgangsstellung abgebildet, die normalerweise der Fahrstellung des Sitzes entspricht.

Das Sitzelement 2 kann in Bezug zum Unterbau 3 in üblicherweise über zum Beispiel Gleitschienen der Verschiebeeinheit 5 nach hinten aus der Ausgangsposition gemäß Figur 1a verschoben werden. Die Verschieberichtung ist durch den Pfeil 6 symbolisiert.

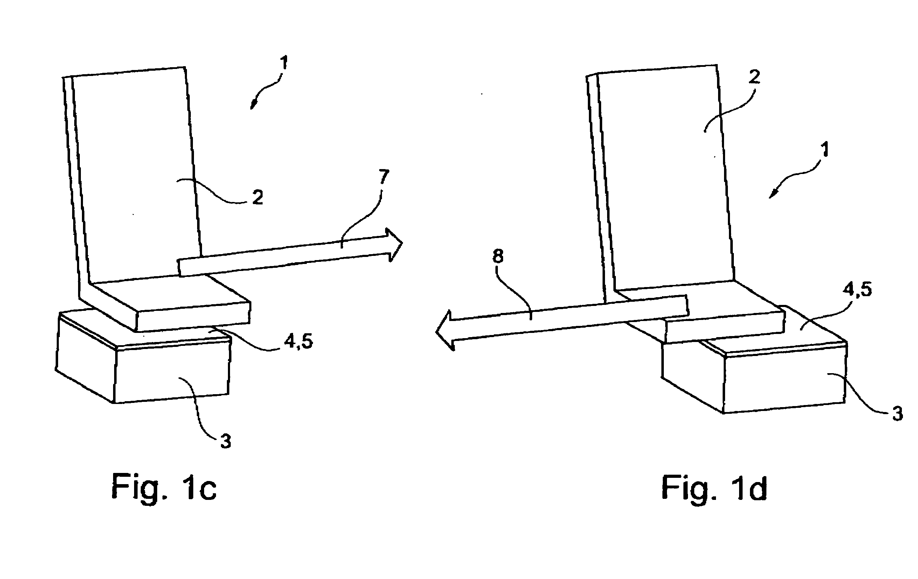

Zusätzlich zur Verschieberichtung nach hinten entgegen einer Fahrtrichtung bezogen auf einen Ausgangszustand lässt sich das Sitzelement 2 jedoch auch über Gleitschienen der Verschiebeeinheit 5 nach rechts (siehe Pfeil 7) in Figur 1c und nach links (siehe Pfeil 8) gemäß Figur 1d verschieben.

Damit lässt sich das Sitzelement 2 zum Beispiel vor einem Verdrehvorgang in eine gewünschte Stellung bringen, mit welcher sich beim Drehen zum Beispiel Kollisionen mit Einbauten in einem Fahrzeug vermeiden lassen.

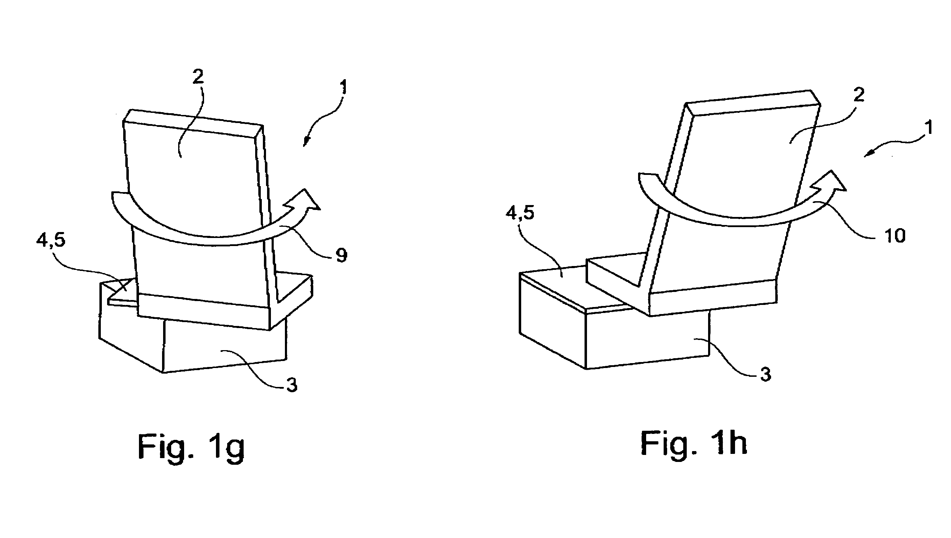

Beispielsweise ist die Verschiebeposition die Verschiebestellung des Sitzelements 2 nach links, aus welcher über die Dreheinheit 4 der Sitz dann zum Beispiel um 135° entgegen des Uhrzeigersinns bzw. um 180° entgegen des Uhrzeigersinns gedreht wird (siehe Figuren 1g und 1h mit der durch die Pfeile 9 und 10 veranschaulichten Drehrichtung entgegen des Uhrzeigersinns).

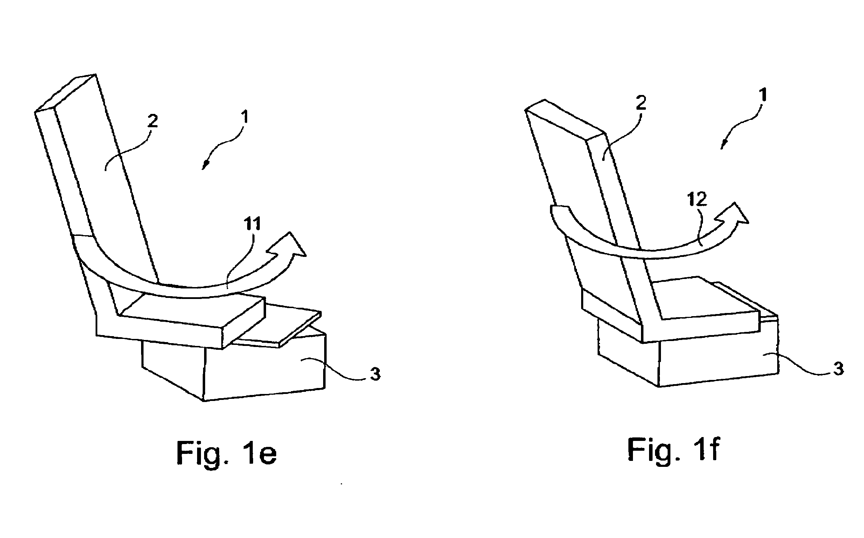

Auch andere Drehstellungen von 45° oder 90° bezogen auf eine Ausgangsposition gemäß Figur 1a sind möglich (siehe Figur 1e bzw. 1f mit Pfeilen 11, 12 die die Drehstellung veranschaulichen).

Nach einer Drehung des Sitzelements in eine gewünschte Position ist es denkbar anschließend den Sitz zurück zu verschieben zum Beispiel in der Situation gemäß Figur 1h nach links, um einen gewünschten Platz auf der rechten Seite zu verschaffen.

Im vorliegenden Ausführungsbeispiel ist somit die Dreheinheit 4 unverrückbar mit dem Unterbau an einer Position verbunden, wogegen die Verlagerungsmöglichkeiten nach hinten, nach vorne sowie nach links und rechts seitlich zum Beispiel durch überkreuz angeordnete Gleitschienen realisiert sind.

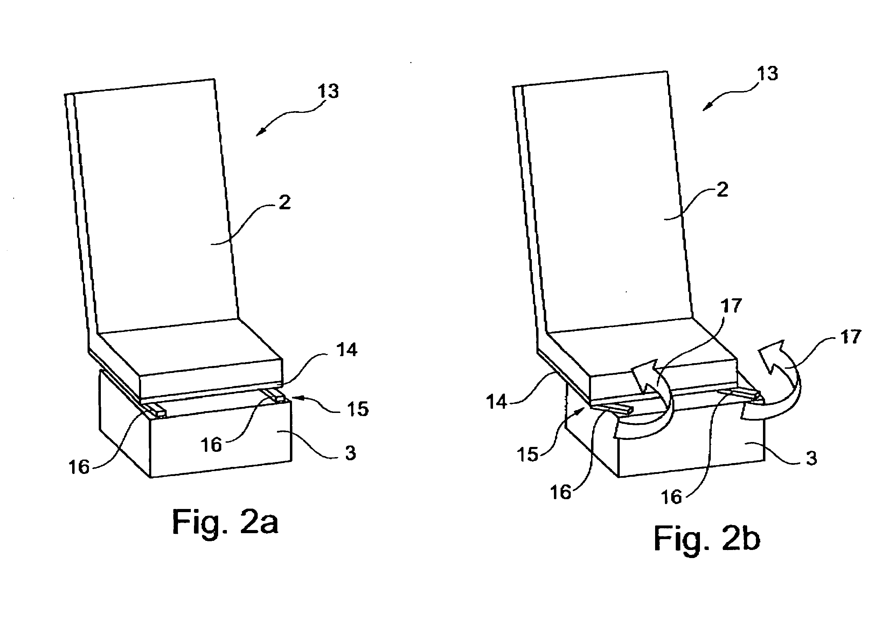

Eine weitere Möglichkeit ein Sitzelement 2 seitlich zu verlagern, ist in den Figuren 2a bis f dargestellt.

Neben dem Sitzelement 2 verfügt dieser Fahrzeugsitz 13 über einen Unterbau 3 sowie einer Dreheinheit 14, die jedoch über eine Schwenkeinheit 15 mit verschwenkt wird und nicht ortsfest in Bezug zum Unterbau 3 ist.

In Figur 2a ist eine Ausgangsposition dargestellt, in welcher die Dreheinheit 14 auf welchem das Sitzelement 2 montiert ist, unverdreht und die Schwenkeinheit 5 nicht verschwenkt ist. In diesem Zustand der Schwenkeinheit zeigen Schwenkarme 16 bezogen auf eine Ausgangsstellung, einer unverdrehten und unverschwenkten Fahrstellung vom Unterbau 3 aus gesehen entgegen einer Fahrtrichtung nach hinten.

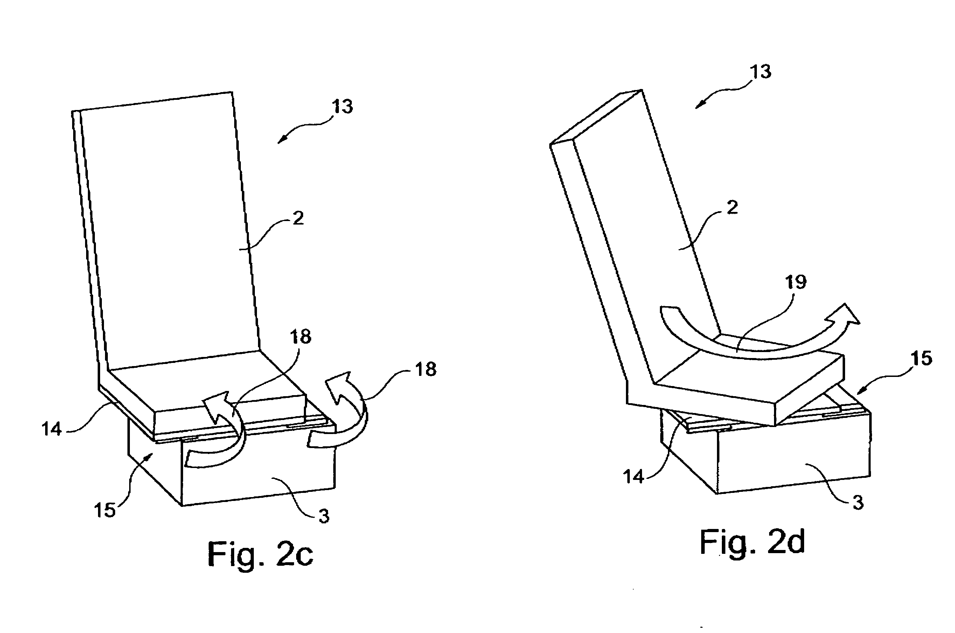

In den Figuren 2b und 2c ist die Dreheinheit 14 zusammen mit dem Sitzelement 2 nach links geschwenkt, wobei in Figur 2b die Schwenkhebel 16 um 45° und in Figur 2c um 90° entgegen des Uhrzeigersinns gemäß den Pfeilen 17, 18 gedreht sind.

Grundsätzlich ist es vorteilhaft, wenn in jeder Schwenkstellung der Schwenkeinheit 15 das Sitzelement 2 auf der mitverschwenkten Dreheinheit 14 über die Dreheinheit gedreht werden kann.

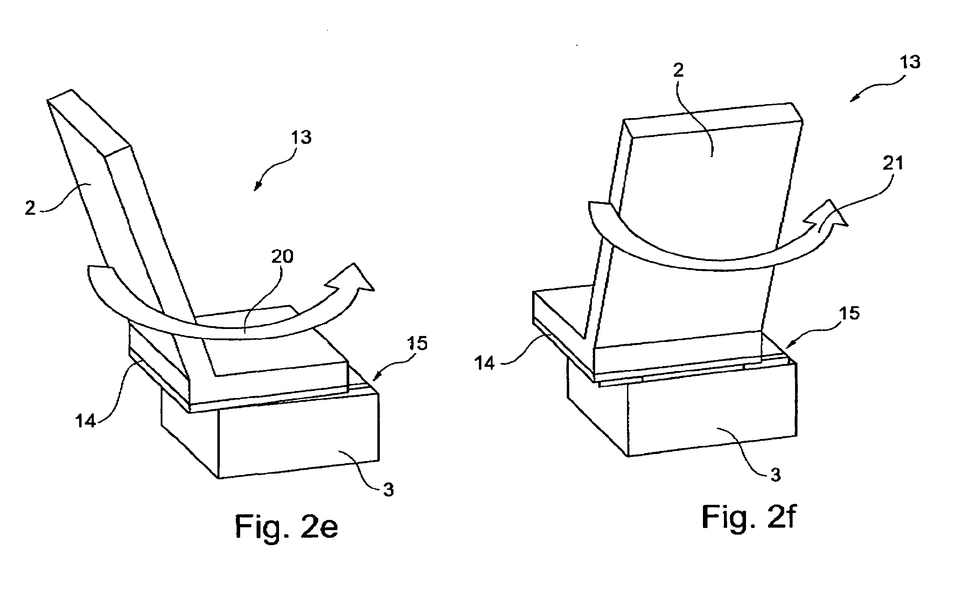

Die Figuren 2d, 2e sowie 2f veranschaulichen Drehstellungen von 45°, 90° sowie 180° des Sitzelements 2 der seitlich nach links maximal ausgeschwenkten Dreheinheit 14.

Soll eine Verdrehung stattfinden, kann, wie zum Beispiel in Figur 2c gezeigt, zunächst das Sitzelement 2 seitlich nach links ausgeschwenkt werden, um dann die Drehung vorzunehmen, gegebenenfalls eine volle Drehung 180°, so wie in Figur 2f dargestellt. Anschließend kann dann ein Zurückschwenken des Sitzelements 2 stattfinden (nicht dargestellt), um zum Beispiel den Platz auf der linken Seite, an welcher nunmehr das Sitzelement mit der Dreheinheit über den Unterbau 3 übersteht, wieder freizugeben.

Gegebenenfalls lassen sich beliebige Schwenkstellungen mit der Schwenkeinheit 15, dass heißt beliebige Verdrehungen der Schwenkarme 16 realisieren, in welchen eine Arretierung der jeweiligen Schwenkstellung stattfinden kann. Möglicherweise ist es jedoch vorteilhaft nur bestimmte rasterartig vorgegebene Schwenkstellungen, die auch arretiert werden können, zu ermöglichen. Gleiches kann für die Drehung des Sitzelements 3 über die Dreheinheit 14 gelten.

### Bezugszeichenliste:

- 1: Fahrzeugsitz
- 2: Sitzelement
- 3: Unterbau
- 4: Dreheinheit
- 5: Vorschiebeeinheit
- 6: Pfeil
- 7: Pfeil
- 8: Pfeil
- 9: Pfeil
- 10: Pfeil
- 11: Pfeil
- 12: Pfeil
- 13: Fahrzeugsitz
- 14: Dreheinheit
- 15: Schwenkeinheit
- 16: Schwenkarm
- 17: Pfeil
- 18: Pfeil
- 19: Pfeil
- 20: Pfeil
- 21: Pfeil

## Patentansprüche

1. Montagevorrichtung für einen Fahrzeugsitz (1), welche eine Montageeinheit für ein Sitzelement des Fahrzeugsitzes zur Anordnung in einem Fahrzeug umfasst, **dadurch gekennzeichnet, dass** eine Verlagerungseinrichtung (5, 15) vorgesehen ist, die auf einer Dreheinheit (4) der Montagevorrichtung sitzt und mit welcher die Montageeinheit in Bezug zur Dreheinheit seitlich bezogen auf eine Dreheinheitvorderseite verlagerbar ist, die in einem unverdrehten und in einem im Fahrzeug montierten Zustand in Fahrtrichtung zeigt.

2. Vorrichtung nach einem der vorhergehenden Ansprüche, **dadurch gekennzeichnet, dass** die Verlagerungseinrichtung eine Gleiteinheit (5) umfasst, mit welcher die Montageeinheit in Bezug zur Dreheinheit (4) seitlich bezogen auf eine Dreheinheitvorderseite, die in einem unverdrehten und in einem im Fahrzeug montierten Zustand in Fahrtrichtung zeigt, verschiebbar ist.

3. Vorrichtung nach dem Oberbegriff des Anspruchs 1, insbesondere nach einem der vorhergehenden Ansprüche, **dadurch gekennzeichnet, dass** eine Schwenkeinheit (15) vorgesehen ist, mit welcher die Montageeinheit in einem bestimmungsgemäß montierten Zustand in Bezug auf einen Unterbau quer zur Fahrtrichtung verschwenkbar ist.

4. Vorrichtung nach einem der vorhergehenden Ansprüche, **dadurch gekennzeichnet, dass** die Schwenkeinheit (15) wenigstens zwei Schwenkhebel (16) aufweist, die zwischen einem Unterbau (3) und der Montageeinheit derart gelenkig angeordnet ist, dass sich die Schwenkhebel (16) für einen Schwenkvorgang gemeinsam verschwenken lassen und dabei die Montageeinheit seitlich verlagern.

5. Vorrichtung nach einem der vorhergehenden Ansprüche, **dadurch gekennzeichnet, dass** die wenigstens zwei Schwenkhebel (16) so angeordnet sind, dass bei einem Schwenkvorgang sich die Schwenkhebel (16) in der Art eines Parallelogramms verlagern.

6. Vorrichtung nach einem der vorhergehenden Ansprüche, **dadurch gekennzeichnet, dass** vier Schwenkhebel vorgesehen sind.

7. Vorrichtung nach einem der vorhergehenden Ansprüche, **dadurch gekennzeichnet, dass** sich Schwenkhebel über zumindest 90°, 180°, 270° oder 360° verschwenken lassen.

8. Vorrichtung nach einem der vorhergehenden Ansprüche, **dadurch gekennzeichnet, dass** die Schwenkhebel Anschlagmittel aufweisen, die eine Schwenkbewegung nur in einem vorgesehenen Schwenkbereich erlauben.

9. Vorrichtung nach einem der vorhergehenden Ansprüche, **dadurch gekennzeichnet, dass** eine Verlagerungsstellung arretierbar ist.

10. Vorrichtung nach einem der vorhergehenden Ansprüche, **dadurch gekennzeichnet, dass** eine Gleiteinheit vorgesehen ist, mit welcher die Montageeinheit nach vorne und hinten verschiebbar ist, bezogen auf einen im Fahrzeug montierten unverdrehten Zustand.

11. Vorrichtung nach einem der vorhergehenden Ansprüche, **dadurch gekennzeichnet, dass** die Montageeinheit eine Dreheinheit umfasst.

12. Vorrichtung nach einem der vorhergehenden Ansprüche, **dadurch gekennzeichnet, dass** zwischen Montageeinheit und Schwenkeinheit eine Dreheinheit vorgesehen ist.

13. Fahrzeugsitz mit einer Vorrichtung nach einem der vorhergehenden Ansprüche.
